# EUROPEAN PATENT APPLICATION

(11) **EP 4 814 360 A1**
(43) Date of publication of application: **30.09.2026**
(21) Application number: 26166913.9
(22) Date of filing: 23.03.2026
(51) Int. Cl.: F16L 37/098, F16L 37/10

(54) **HOSE FITTINGS**

(30) Priority: 26.03.2025 GB 202504453
(71) Applicant: Exel Industries, 51200 Epernay (FR)
(72) Inventor: IACIOFANO, Nicolino, Birmingham, B76 1AB (GB)
(74) Representative: Cleveland Scott York

(57) **Abstract**

A garden hose fitting 1 comprising a hose connector portion 2 for accepting the end of a garden hose and a connector receiving portion 3 for accepting an O-ring carrying male connector portion 101 of a component to be connected to the hose fitting 1. The connector receiving portion 3 defines a receiving bore B for accepting the male connector portion 101 and comprises a plurality of engaging fingers 71 arranged to move resiliently between an extended position for capturing the male connector portion 101 and a retracted position facilitating insertion and removal of the male connector portion 101 in the receiving bore B. An O-ring retaining portion 72 is provided in the receiving bore B for accepting an O-ring 102 which is retained in the fitting 1 and arranged for sealing against a male connector portion 101 when inserted into the receiving bore B and connected to the hose fitting 1.

## Description

This invention relates to hose fittings, in particular garden hose fittings, which are used to connect a hose to a garden tap/faucet, or a hose to another garden product or indeed a hose to another length of hose.

There are different types of garden fittings which are commonly used. One popular type is a push fit form of connector system where there is a male part and a female part arranged so that the male part may be push fitted into the female part and be retained for normal use until released.

One system which is widely used in Europe and elsewhere is the "quick-connect" connection system. Different manufacturers make such connector systems which sometimes are constructed differently from one another but to large degree are interchangeably usable. The two parts of the connector system are typically made of plastics material or a combination of metal and plastics material parts.

In a quick-connect connection system, one part is a male part and carries at least one O-ring seal, the other part is female and includes a bore arranged to accept the male part with the O-ring seal sealing against a wall of the bore. The female part further comprises a plurality of engaging fingers arranged to move between an extended position for capturing the male part and a retracted position allowing insertion and removal of the male part in the receiving bore. As the male part is introduced into the receiving bore the engaging fingers are driven into the retracted position and return to the extended position once the two parts are fully engaged. A release mechanism can be provided for releasing the two parts. When operated this retracts or allows retraction of the engaging fingers so that the male part may be removed. Typically the female part is arranged as a hose fitting.

Typically, a garden hose fitting of a quick-connect connection system comprises:
a hose connector portion for accepting the end of a garden hose and a connector receiving portion for accepting an O-ring carrying male connector portion of a component to be connected to the hose fitting,
the connector receiving portion defining a receiving bore for accepting the male connector portion and comprising a plurality of engaging fingers arranged to move resiliently between an extended position for capturing the male connector portion and a retracted position facilitating insertion and removal of the male connector portion in the receiving bore.

Such fittings are convenient for the user and work well in allowing easily reversible connection, by a user, of a hose to tap/faucet via a tap adaptor having an O-ring carrying male connector portion and/or to other components having an O-ring carrying male connector portion. Because of these benefits such fittings have been used for many year not withstanding the fact that users sometimes perceive leaking issues with such fittings. Correspondingly it would be desirable to address the perceived leaking issues to further enhance the effectiveness of, and user experience of, such fittings.

According to one aspect of the present invention there is provided a garden hose fitting comprising:
a hose connector portion for accepting the end of a garden hose and a connector receiving portion for accepting an O-ring carrying male connector portion of a component to be connected to the hose fitting,
the connector receiving portion defining a receiving bore for accepting the male connector portion and comprising a plurality of engaging fingers arranged to move resiliently between an extended position for capturing the male connector portion and a retracted position facilitating insertion and removal of the male connector portion in the receiving bore,
wherein an O-ring retaining portion is provided in the receiving bore for accepting an O-ring which is retained in the fitting and arranged for sealing against a male connector portion when inserted into the receiving bore and connected to the hose fitting.

It has been determined by the applicant that the user perceived leaking issues can be as a result of UV damage to the O-ring on a male connector portion and/or damage if a component including a male connector portion is dragged on the ground. The present arrangement helps to alleviate these potential causes of user perceived leaking issues by allowing provision of a seal in a location that is better protected against exposure to UV and against possible physical damage via abrasion or similar.

According to another aspect of the present invention there is provided a garden hose fitting assembly comprising a garden hose fitting as defined above and an O-ring seal disposed in the O-ring retaining portion of the fitting.

The O-ring seal disposed in the O-ring retaining portion may be termed a fitting O-ring in the sense of being the O-ring of or in the fitting, and this expression is used below to help distinguish between this O-ring and the O-ring that may be present on a male connector portion - which itself can be termed a connector O-ring.

Whilst the present arrangement can alleviate the perceived leaking issues, finding an optimal working arrangement is not without difficulties. There is a desire to ensure that the fitting is compatible with existing male connector portions and there are some differences in precise dimensions amongst different commercially available quick-connect male connector portions. Thus determining an optimal position for the O-ring retaining portion can be non-trivial.

The O-ring retaining portion may be provided as a recess in a sidewall of the receiving bore.

The fitting may have a connector portion insertion end via which a male connector portion is introducible into the receiving bore. The fitting may have an engaging region at which the engaging fingers protrude into the receiving bore. The O-ring retaining portion may be disposed further away from the connector portion insertion end of the fitting than is the engaging region.

The O-ring retaining portion may be disposed closer to the connector portion insertion end of the fitting than is a region of the receiving bore which is arranged to seal against the connector O-ring of a male connector portion when received in the fitting.

The O-ring retaining portion may be disposed in the bore so that when a male connector portion is received in the fitting, the male connector portion extends past the location of the O-ring retaining portion.

The O-ring retaining portion may be disposed in the bore so that when a male connector portion is received in the fitting, and an O-ring is provided in the O-ring retaining portion, the O-ring is arranged to seal on a curved sidewall of the male connector portion.

The O-ring retaining portion may be at least partly defined by a retaining sleeve portion which is received in the receiving bore.

The connector receiving portion of the fitting may comprise a body portion. The retaining sleeve portion may be mounted on the body portion. The retaining sleeve portion may be bonded to the body portion. The retaining sleeve portion may be bonded to the body portion using adhesive. The retaining sleeve portion may be bonded to the body portion by sonic welding.

The O-ring retaining portion may comprise a groove defined by the body portion and the retaining sleeve portion.

The retaining sleeve portion may serve to clamp the fitting O-ring into position in the receiving bore.

The retaining sleeve portion may be disposed in the engaging region. In this way the retaining sleeve portion can serve the dual purposes of at least partly defining the O-ring retaining portion and providing a control surface for at least one of guiding and supporting a male connector portion when inserted into the fitting.

The retaining sleeve portion may comprise at least one aperture through which a respective one of the plurality of engaging fingers extends when in the extended position.

This facilitates holding of the male connector portion in position when engaged by the fingers.

The body portion may comprise at least one projection in the receiving bore which is arranged to engage with a complimentary recess provided on an outer curved surface of the retaining sleeve portion for positioning the retaining sleeve portion in the fitting. The interaction of the at least one projection and the complimentary recess may position the retaining sleeve portion axially with respect to the body portion and/or angularly around the axis of the body portion. This in turn can help determine the size of the O-ring retaining portion - say the width of the groove where the O-ring retaining portion comprises a groove and/or help position the retaining sleeve portion with respect to the engaging fingers - say ensure apertures in the retaining sleeve portion are in register with the engaging fingers.

The provision of a retaining sleeve portion can assist in manufacture and assembly. Providing this as a separate component from the body facilitates moulding, say injection moulding of the body as it avoids say having to mould an undercut portion to act as the O-ring retaining portion. It can also assist in assembly as the O-ring can be inserted into the bore, in the region of the O-ring retaining portion and then captured in position when the retaining sleeve portion is mounted onto, say bonded to, the body portion.

Preferably the fitting is a quick-connect hose fitting. Preferably the fitting is backwards compatible with existing quick-connect male connector portions.

The hose fitting may comprise a release mechanism which when operated one of causes and allows retraction of the engaging fingers for facilitating removal of the male connector portion.

The release mechanism may comprise a retractable sleeve. The retractable sleeve may be axially retractable relative to the body portion of the fitting.

In one set of embodiments, the connector receiving portion of the hose fitting comprises a retractable sleeve and a body portion with the retractable sleeve mounted for axial movement on the body portion, and the release mechanism is arranged to be operated by an axial retraction of the retractable sleeve relative to the body portion away from the connector portion insertion end of the fitting, and
wherein the hose fitting comprises a blocking ring portion which is moveably mounted on the connector receiving portion and moveable between a non-blocking position which allows retraction of the retractable sleeve relative to the body portion so allowing operation of the release mechanism and a blocking position in which the blocking ring portion blocks retraction of the retractable sleeve relative to the body so obstructing operation of the release mechanism. Preferably, the blocking ring portion is at least partially visible to a user in use when in at least one of the non-blocking position and the blocking position.

In at least some embodiments when the blocking ring portion is in the blocking position there is chain of mechanical contact between the sleeve portion, the blocking ring portion and the body such that abutment between these components resists retraction of the sleeve portion. On the other hand in such embodiments, the arrangement may be such that when the blocking ring portion is in the non-blocking position the chain of mechanical contact is broken so allowing retraction of the sleeve.

Preferably the blocking ring portion is rotatably mounted on the connector receiving portion and rotatable around an axis of the fitting between the non-blocking position and the blocking position. The mounting may be such that rotational movement of the blocking ring around the axis of the fitting causes axial movement of the blocking ring relative to the connector receiving portion.

In some embodiments the blocking ring portion is mounted, say rotatably mounted, on the body portion. Is some embodiments the blocking ring portion is mounted, say rotatably mounted, on the retractable sleeve.

Where the blocking ring is mounted on the retractable sleeve, the blocking ring may be arranged to be spaced from the body portion when in the non-blocking position, and arranged to abut with the body portion when in the blocking position.

Where the blocking ring is mounted on the body portion, the blocking ring may be arranged to be spaced from the retractable sleeve when in the non-blocking position, and arranged to abut with the retractable sleeve when in the blocking position.

In some sets of embodiments, the hose fitting comprises at least one finger obstruction portion which is moveable between a first, non-operative, position which allows movement of the plurality of engaging fingers to the retracted position and a second, obstructing, position in which the at least one finger obstruction portion obstructs movement of at least one engaging finger of the plurality of engaging fingers to the retracted position.

The provision of at least one finger obstruction portion can assist in resistance against unintentional disconnection of a male part from the fitting. In particular this can help resist disconnection that may arise in prior connection systems when excessive separating force is applied - eg if a hose connected via a fitting is pulled on very hard by a user whether this is deliberate or accidental.

A locking ring may be provided on which the at least one finger obstruction portion is mounted, and which is usable by a user for moving the at least one finger obstruction portion between the first and second positions.

Preferably the locking ring portion is rotatably mounted on the connector receiving portion and rotatable around an axis of the fitting to move the at least one finger obstruction portion between the first and second positions. Preferably the locking ring portion comprises the blocking ring, so that movement of the locking ring portion moves both the blocking ring and the at least one finger obstruction portions.

In this way the locking ring can be used to provide both the retractable sleeve blocking effect and the retractable finger blocking effect. These features together can, in use, help avoid unintentional disconnection of a component from the fitting.

The hose connection portion may comprise:
a hose receiving portion in which is disposed a spigot for receiving the end of a length of hose; and
a clamping arrangement comprising a locking nut and a plurality of deformable claws which surround the spigot and are arranged to be driven into contact with hose carried on the spigot under action of the locking nut such that a carried hose is clampable between the claws and the spigot.

The hose connection portion may have a hose introduction end via which hose is introduced onto the spigot in use.

In one set of embodiments the plurality of deformable claws each have first end portions via which they are joined to the hose connection portion and second engaging end portions for biting into a carried hose and the first end portions of the claws are closer to the hose introduction end of the hose connection portion than are the second end portions of the claws, so that the claws project inwardly into the hose connection portion.

This can assist a user in correctly mounting a hose on the fitting.

In an alternative set of embodiments the plurality of deformable claws each have first end portions via which they are joined to the hose connection portion and second engaging end portions for biting into a carried hose and the second end portions of the claws are closer to the hose introduction end of the hose connection portion than are the first end portions of the claws, so that the claws project towards the hose introduction end of the hose connection portion. This corresponds to the arrangement of claws in existing quick-connect hose fittings.

In some sets of embodiments the hose connection portion has a hose introduction end via which hose is introduced onto the spigot in use, a skirt portion is provided around the spigot so as to define a hose receiving region between the skirt portion and the spigot, and an inspection window is provided in the skirt portion to enable viewing of a hose end when introduced onto the spigot and into the hose receiving region.

The user can then use the window to check if a hose end is correctly mounted on the spigot.

According to another aspect of the invention, there is provided a connector arrangement comprising a hose fitting assembly as defined above and a component connected to the hose fitting assembly, the component comprising a male connector portion accepted in the connector receiving portion of the hose fitting.

The connector arrangement may be arranged as a quick-connect connection system.

The male connector portion typically carries at least one O-ring seal for sealing against a wall of the receiving bore. What can be termed at least one connector O-ring seal on the basis it is provided on the male connector portion.

The fitting O-ring seal may have a main internal diameter which is larger than a main external diameter of the at least one connector O-ring seal.

The fitting and male connector portion may be arranged so that the at least one connector O-ring seal may pass through the fitting O-ring seal as the male connector portion is inserted into the receiving bore.

The diameter of the cross-section of the material of the fitting O-ring seal may be smaller than the diameter of the cross-section of the material of the at least one connector portion O-ring seal.

The male connector portion typically comprises a shoulder portion arranged to engage with the engaging fingers when the male connector portion is received in the receiving bore.

The O-ring retaining portion in the fitting may be arranged to be further from the connector portion insertion end of the fitting than is the shoulder portion of the male connector portion when the male connector portion is received in and captured in the receiving bore.

The O-ring retaining portion in the fitting may be arranged to be closer to the connector portion insertion end of the fitting than is the at least one connector O-ring seal of the male connector portion when the male connector portion is received in and captured in the receiving bore.

The O-ring retaining portion in the fitting may be arranged to be axially between the at least one connector O-ring seal of, and the shoulder portion of, the male connector portion when the male connector portion is received in and captured in the receiving bore.

Here axially means in relation to the axis of the receiving bore.

The retaining sleeve portion may be arranged to at least one of guide and position the shoulder portion of the male connector portion when the male connector portion is received in and captured in the receiving bore.

The component comprising a male connector portion may be a tap (faucet) adaptor.

According to another aspect of the invention, there is provided a garden hose arrangement comprising a hose fitting assembly as defined above and a length of garden hose mounted in the hose connection portion.

The garden hose arrangement may further comprise a component connected to the hose fitting assembly, the component comprising a male connector portion accepted in the connector receiving portion of the hose fitting.

Note that, in general terms and with any necessary modifications in wording, all of the further features defined above following any aspect of the invention above are applicable as further features of all other aspects of the invention defined above. These further features are not restated after each aspect of the invention merely for the sake of brevity.

Embodiments of the present invention will now be described, by way of example only, with reference to the accompanying drawings in which:
Figure 1 schematically shows a hose fitting;
Figure 2 schematically shows the hose fitting of Figure 1 with a retaining sleeve portion of the hose fitting and a fitting O-ring of the hose fitting shown separately before these are mounted in the remainder of the hose fitting;
Figure 3 is a sectional view of the hose fitting of Figures 1 and 2 with a tap adaptor received in the hose fitting to form a connector arrangement;
Figure 4 shows the sectional view of Figure 3, but with the tap adaptor in a position adopted when the connector arrangement is under water pressure;
Figures 5A and 5B show the hose fitting of Figures 1 to 4 in two states - Figure 5A shows the fitting in a locked state, and Figure 5B shows the fitting in an unlocked state;
Figure 6 schematically shows an alternative hose fitting.

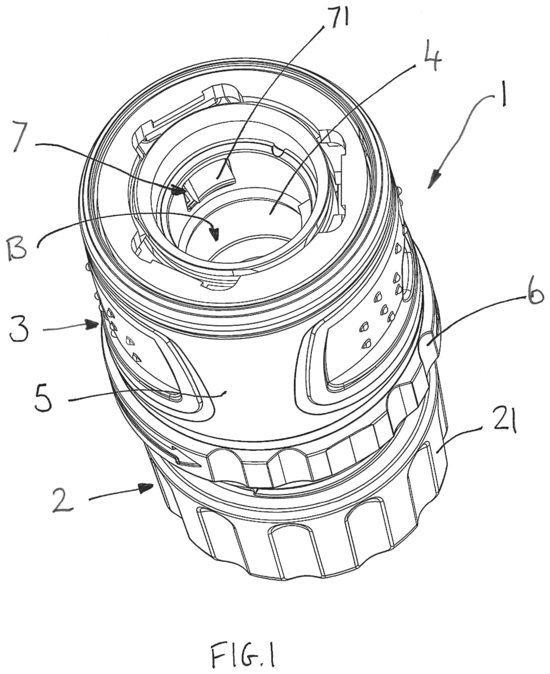

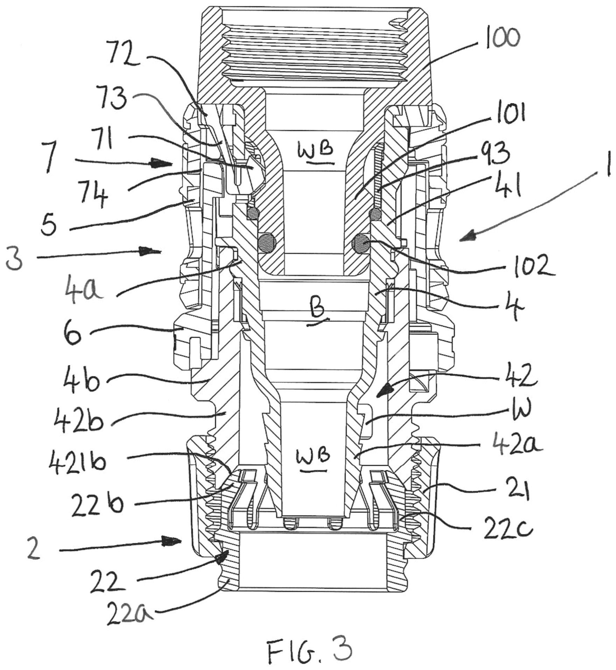

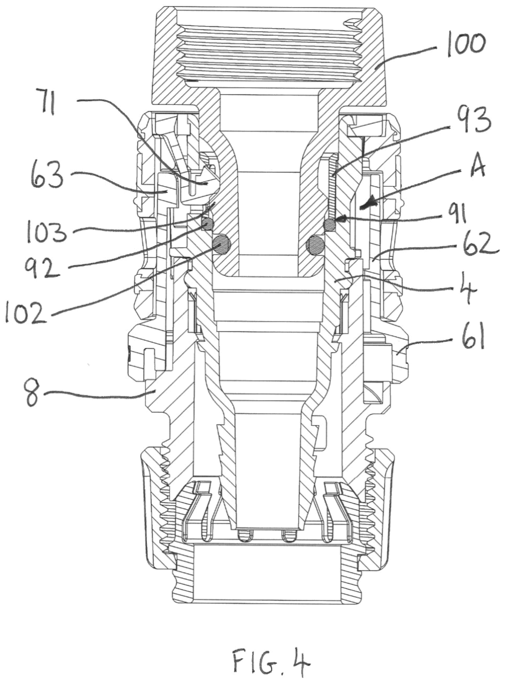

Figures 1, 2, 5A and 5B show a garden hose fitting 1 which is compatible for use in existing quick-connect connection systems. The hose fitting 1 may thus be considered a quick-connection garden hose fitting. Figures 3 and 4 show the garden hose fitting 1 connected with a tap adaptor (or tap connector) 100.

Referring particularly to Figures 1 and 3, the garden hose fitting 1 comprises a hose connection portion 2 for accepting the end of a length of garden hose and a connector mounting portion 3 for accepting a connector portion of a component to be connected to the hose fitting 1. The tap adaptor 100 shown in Figures 3 and 4 is an example of a component which has a connector portion or "male part" 101 which is arranged to be connected to the hose fitting 1. Other example components include water outlet devices such as hose guns, watering nozzles, watering lances and so on, and water storage devices such as tanks, reservoirs and so on which have a suitable connector portion.

As mentioned in the introduction, fittings of the general type shown in this specification are well known for facilitating connection of a garden hose to another device in a way that is quick and easy for the user, and which allows quick and easy disconnection and reconnection when desired. The arrangement in Figures 3 and 4 can be used to allow easy connection, disconnection, and reconnection of a hose to a water outlet tap (or faucet) for a user. The tap adaptor 100 is mounted on the tap one time, the fitting 1 is mounted on a hose end one time, and then the hose can be connected to the tap via the fitting 1 and tap adaptor 100 whenever desired. The connection just requires a push fit and disconnection is achieved using a release mechanism that will be described below. The fitting 1 can then be easily connected to another suitable component, such as to another tap via another tap adaptor 100, or, say a hose gun with a suitable connector portion, when desired and easily re-connected to the initial tap when desired.

This specification concerns fittings 1 which are arranged to provide an enhanced resistance to leaking when the fitting 1 and the component - for example a tap adaptor 101 - are connected. In some embodiments an enhanced connection between the fitting 1 and the component is also facilitated, which itself can help resist leaking.

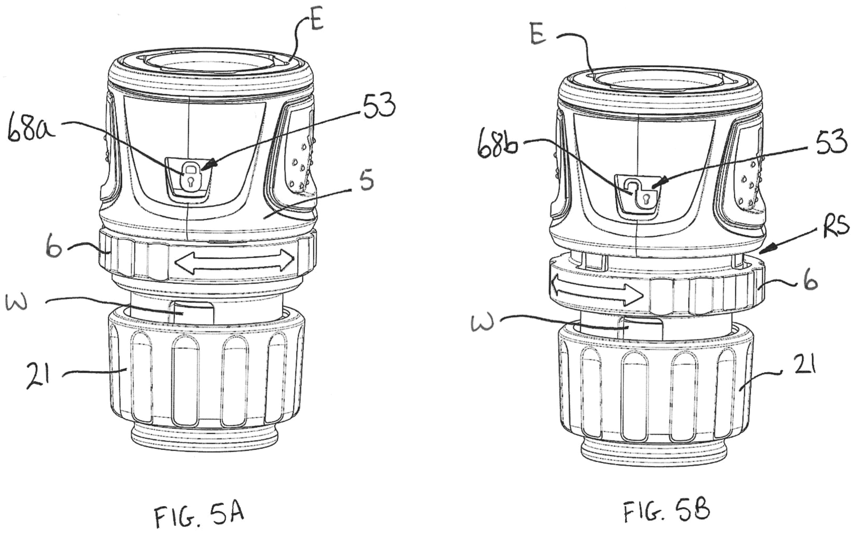

Returning now to Figures 1 to 5A and 5B, the fitting 1 comprises a body 4 on which is mounted a retractable sleeve 5, a locking ring 6, and a male part engaging arrangement 7 comprising a plurality of engaging fingers 71 (see Figures 1, 3 and 4).

The body 4 (see Figures 3 and 4) comprises a connector mounting body portion 41 and a hose connection body portion 42. The connector mounting body portion 41 defines a bore B which is arranged for receiving the connector portion 101 of a component to be connected to the fitting. The hose connection body portion 42 comprises a spigot 42a for receiving the end of a length of hose.

The hose connection body portion 42 further comprises a hollow cylindrical threaded stem portion 42b in which the spigot 42a is disposed.

The threaded stem portion 42b receives a complementarily threaded nut 21. The threaded nut 21 in turn carries a ring-like clamping portion 22. The clamping portion 22 comprise a collar portion 22a via which the clamping portion 22 is mounted on the threaded nut 21 and a plurality of clamping claws 22b which are joined to the collar portion 22a via respective plastic hinge portions 22c. The clamping claws 22b sit within a tapered bore portion 421b in the threaded stem portion 42b and are arranged so as to be deformed inward under action of the tapered bore portion 421b as the threaded nut 21 is screwed onto the threaded stem portion 42b.

Thus when a length of hose is located on the spigot 42a and the threaded nut 21 is screwed into position, the clamping claws 22b are driven into clamping contact with the outside wall of the hose and serve to clamp a carried hose onto the spigot 42a.

The hose connection portion 2 can be considered to comprise the hose connection body portion 42, the threaded nut 21 and the clamping portion 22.

In the present hose fitting 1, the clamping claws 22b are directed inwardly into the body of the fitting so that when the end of a hose is fitted in the hose connection portion 2, the hose passes an end of the claws 22b by which they are joined to the fitting 1, before reaching the free or engaging end. This "reverse claw" arrangement can help in mounting the hose end in the fitting. In other alternative versions of the fitting 1, a more conventional "forward claw" arrangement may be used in which the claws are provided on the threaded stem portion 42b. In such a case the free or engaging end of the claws is reached by a hose end when being inserted before the end joined to the fitting.

In the present embodiment the body 4 is formed from two components which are joined together - an inner part 4a which defines the connector portion receiving bore B and comprises the spigot 42a (and an outer part 4b which comprises the threaded stem portion 42b.

A window W is provided in a skirt portion of the threaded stem portion 42b (see for example Figures 3, 5A) which allows viewing of an end of a hose as it is mounted on the spigot.

Referring again to Figures 1, 3 and 4, as mentioned above the male part engaging arrangement 7 comprises a plurality of (in this case three) engaging fingers 71. The plurality of engaging fingers 71 are mounted on ring portion 72 via resilient web portions 73. The ring portion 72 is mounted on the body 4 to hold the male part engaging arrangement 7 on the fitting 1. In the present embodiment the engaging fingers are angularly equispaced around the bore B and in the present embodiment the male part engaging arrangement 7 is formed in a single piece of a resilient plastics material.

The engaging fingers 71 are shown in an extended position in Figure 1 and shown in an extended position and engaged with the male part 101 of the tap adaptor 100 in Figures 3 and 4. In this position the engaging fingers 71 resist removal of the male part 101 from the receiving bore B of the fitting 1 and hence tend to keep the fitting 1 connected to the tap adaptor 100.

As will be appreciated when the fitting 1 is mounted on the tap adaptor 100 (or another similar component), water can flow through the fitting 1 and the tap adaptor 100, in particular thought respective water flow bores WB provided in the tap adaptor 100 and the spigot 42a, with an O-ring 102 mounted on the male part 101 serving to seal between the male part 101 and the receiving bore B.

When the male part 101 is being inserted into the receiving bore B, the engaging fingers 71 flex radially outwardly as the larger diameter end portion of the male part 101 passes them. There is a finger accepting space 74 within the retractable sleeve 5 into which the respective finger 71 can move when it flexes radially outwardly, when the fitting is in an unlocked state. As will be explained in more detail below, Figures 3 and 4 show the fitting 1 in a locked state so this finger accepting space 74 is occupied.

When the fingers 71 are in the extended position and engaged with a male part 101, an attempt to pull the male part 101 out of the bore B is resisted by the fingers 71 and the arrangement is such that radially outward movement of the fingers 71 by axial pulling on the male part 101 alone tends to be resisted - though if the finger accepting space 74 is available in this state (which is the case in conventional quick-connect fittings), this resistance may be overcome, if a user "pulls hard enough".

To facilitate removal of a captured male part 101, the fitting 1 includes a release mechanism which is operated by the retractable sleeve 5.

The sleeve 5 is mounted on the body 4 for axial movement relative to the body 4. The sleeve 5 is shown in a forward position in the drawings, say in Figures 1 and 3. In the unlocked state of the fitting 1 shown in Figures 5B, the retractable sleeve 5 is retractable by a user towards the threaded nut 21, or to put this another way, away from a male part insertion end E of the fitting 1.

The retractable sleeve 5 comprises (in this embodiments three sets of) lugs (not shown) provided on its internal surface for acting on the male part engaging arrangement 7 when the sleeve 5 is retracted. Each set of lugs (not shown) is provided for acting in retracting a respective one of the plurality of engaging fingers 71. The lugs (not shown) extend radially inwards of the ends of the webs 73 where these meet the ring 72 and when the male part engaging arrangement 7 and the retractable sleeve 5 are mounted on the body 4, the webs 73 are disposed between arms of the lugs (not shown) and the internal surface of the retractable sleeve 5. Thus the lugs (not shown) may act on the radially inward surfaces of the webs 73 as the sleeve 5 is retracted, travelling down the webs 73 and pulling the fingers 71 radially outwardly and out of the bore B, and out of engagement of a male part 101, when present.

In the present embodiment the engaging fingers move resilient between the extended and retracted positions. Further in this embodiment the resilience of male part engaging arrangement 7 acts as a return force for urging the sleeve 5 towards the forward position as shown in the drawings after retraction by a user.

This structure and operation of the retraction mechanism is conventional and is present in commercially available quick-connect fittings of the applicant and thus only described briefly.

The connector mounting portion can be considered to comprise the connector mounting body portion 41, the male part engaging arrangement 7 and the sleeve 5 which incorporates the release mechanism.

The locking ring 6 is provided to allow a user to selectively lock the fitting 1 against the removal of a connector portion or male part 101 from the bore B of the fitting. That is to lock the fitting 1 in a connected state. Figures 1 to 5A show the fitting in a locked state and Figure 5B shows the fitting in an unlocked state. The locking ring 6 is rotatable relative to the body 4 between the locked and unlocked states.

The locking ring 6 comprises a blocking ring portion 61 and a cylindrical upstanding portion 62 which projects from the blocking ring portion 61 (see Figure 4). The cylindrical upstanding portion 62 comprises a plurality, in this embodiment three, finger obstruction tabs 63 (see Figures 3 and 4).

The body 4, as best seen in Figures 3 and 4, comprises a ring mounting portion 8 which is arranged to receive and interact with the locking ring 6. The ring mounting portion 8 and locking ring 6 comprise complimentary interacting ramp portions (not shown) which cause axial movement of the locking ring 6 when this is rotated relative to the body 4.

Referring, for example, to Figure 3, when the locking ring 6 is mounted on the body 4, the upstanding cylindrical portion 62 is disposed in an annular space A between the body 4 and the retractable sleeve 5. On the other hand the blocking ring portion 61 is outside of the retractable sleeve 5, visible to the user and easily actuated.

With the fitting 1 in the state shown in Figure 5B, retraction of the sleeve 5 away from the connector insertion end E of the fitting 1 is possible because an axial retraction space RS exists between the sleeve 5 and the blocking ring portion 61. On the other hand with the fitting 1 in the state shown in Figures 1 to 5A, retraction of the sleeve 5 away from the connector insertion end E of the fitting 1 is blocked by the blocking ring portion 61. In this state the axial retraction space RS is occupied by the blocking ring portion 61.

This effectively prevents retraction of the sleeve 5 and operation of the release mechanism. Moreover, this state is readily identifiable by the user - the user can readily see the retraction space RS with the fitting 1 in the state shown in Figure 5B and can readily see the absence of this space with the fitting in the state shown in Figure 5A.

Whilst the presence of the blocking ring portion 61 can obstruct movement of the retractable sleeve 5 in the retraction direction due to mechanical abutment between the sleeve 5, the blocking ring portion 61 and the body 4 and this can help stop accidental disconnection of the fitting, this does not necessarily help protect against disconnection caused by, for example, excessive pulling force being applied to a hose.

As mentioned above, in the unlocked state when the engaging fingers 71 retract radially outwardly, they can move into respective finger accepting spaces 74 provided within the retractable sleeve 5. These spaces exist because in this unlocked state the finger obstruction tabs 63 are out of register with the engaging fingers 71. The finger obstruction tabs 63 are spaced, in this embodiment radially and axially, away from the respective finger accepting spaces 74 when the locking ring 6 is in the unlocked position. On the other hand when the locking ring 6 is moved to the locked position, the finger obstruction tabs 63 occupy the respective finger accepting spaces 74, such that radial outward movement of the engaging fingers 71 is obstructed. This then serves to keep the engaging fingers 71 in the bore B in their engaging position, and engaged with the male part 101 of a connector portion 100 when present in the bore B.

In the present embodiment, this movement of the finger obstructing tabs 63 to their obstructing position occurs with movement of the blocking ring portion 61 to its blocking position and this is preferred - ie both forms of enhanced connection are provided and actuated together and preferably also deactivated together. However in alternatives, a blocking ring portion might be used without the use of finger obstructing tabs, or equally finger obstructing tabs might be used without the use of a blocking ring portion. In such a case preferably a visual indicator is still given to a user of when the finger obstructing tabs are in a locking position.

In the present embodiment, the locking ring 6 further comprises indicator portions 68a and 68b which serve to indicate whether the fitting 1 is in a locked state - Figure 5A or an unlocked state - Figure 5B.

In particular, the indicator portions 68a, 68b (see Figures 5A and 5B) show whether the locking ring 6 is positioned so that the finger obstruction tabs 63 occupy the respective finger accepting spaces 74, such that radial outward movement of the engaging fingers 71 is obstructed - as described above with reference to Figure 3. The indicator portions 68a, 68b in this embodiment also indicate that the blocking ring 61 is in its blocking position.

A window 53 is provided in the retractable sleeve 5 through which the indicator portions 68a, 68b can be seen.

In the present fitting 1 the indicator portions 68a, 68b bear symbols to indicate to a user whether the fitting is locked or unlocked. In particular a locked symbol, say in the form of a locked padlock, may be provided to be visible through the window 53 in a locked state and/or an unlocked symbol, say in the form of an unlocked padlock, may be provided to be visible through the window 53 in an unlocked state. A further symbol, say a double headed arrow, may be provided, say between the locked and unlocked symbols, to indicate that the fitting is in an intermediate state.

The above features have been developed to help in ensuring continued connection between the hose fitting 1 and the component to which it is connected to help avoid unexpected escape or leaking of water by separation of the connection. Further the use of the reverse claws arrangement has been developed to assist a user in correct mounting a hose on the fitting 1, and reduce the risk of leaks from the region at which the hose is mounted on the spigot 42a. However the applicants have determined that there can still be risk of a connection arrangement leaking water even when the hose is correctly mounted on the spigot 42a, and the male part 101 of a component is fully captured in the fitting 1.

As mentioned in the introduction the applicant has determined that a typical source of such leaking is due to damage to the O-ring 102 provided on the male part, and that this has been determined is most often due to UV damage to the O-ring 102 or abrasion damage to the O-ring 102.

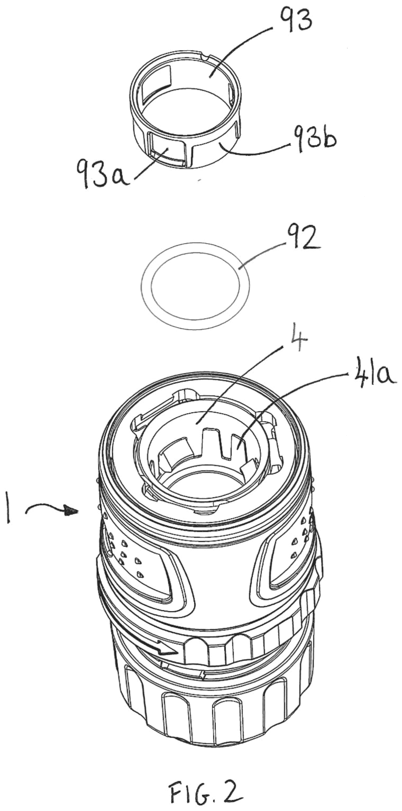

In the present embodiment this is addressed by the provision of an O-ring retaining portion 91 (see Figures 2 and 4) in the main bore B of the fitting 1 which is arranged to accept and retain an O-ring 92 - which can be termed a fitting O-ring 92. Together the fitting 1 and the fitting O-ring 92 comprise a fitting assembly.

The O-ring retaining portion 91 is provided as a recess or circumferential groove in the side wall of the main bore B. In the present embodiment this recess/groove 91 is partly defined by a retaining sleeve portion 93 which is shown separately from a remainder of the fitting 1 in Figure 2. When assembled as shown for example in Figure 4, the retaining sleeve portion 93 is mounted on the body 4, in particular on the connector mounting body portion 41. The retaining sleeve portion 93 is bonded to the body 4, in the present case sonically welded to the body 4.

This construction facilitates moulding, in particular injection moulding, of the body 4 by avoiding the need to directly mould a recess/undercut in the bore B.

The retaining sleeve portion 93 defines at least one, and in this embodiment, three apertures 93a through which the engaging fingers 71 of the engaging arrangement extend when in the extended position as shown in for example Figures 1 and 4.

Referring to Figure 2, an outer curved surface of the retaining sleeve portion 93 comprises at least one, and in this embodiment three recesses 93b each of which is arranged to engage with at least one respective projection 41a provided on the inner curved wall of the connector mounting body portion 41. The recesses 93b and projections 41a are dimensioned and arranged to locate the retaining sleeve portion 93 in the bore B. The recesses 93b and projections 41a are dimensioned and arranged to axially locate the retaining sleeve portion 93 to provide the O-ring retaining groove/recess 91 with a predetermined width. Preferably the retaining sleeve portion 93 serves to clamp the fitting O-ring 92 in position. This clamping effect when used can be a further advantage allowed by the use of the retaining sleeve portion 93 rather than forming a groove in the sidewall of the bore B directly.

The recesses 93b and projections 41a are dimensioned and arranged to angularly (around the axis of the bore B/body 4) locate the retaining sleeve portion 93 in the bore B to align the apertures 93a with the engaging fingers 71.

As can be appreciated from for example Figure 4, the fitting O-ring 92 is positioned and arranged to seal against a male part 101 of a component 100 that is inserted in the fitting 1. Hence the fitting O-ring 92 can provide a second seal in the bore B which can help seal against any leakage if water passes the O-ring 102 provided on the male part 101. In fact, in at least some circumstances the connector O-ring 102 on the male part 101 could be dispensed with.

Of more interest however, is trying to ensure that the fitting 1 is backwards compatible with existing quick-connect male parts 101 of the type shown in Figures 3 and 4 that include a connector O-ring 102.

Such male parts 101, as that shown in the drawings, comprise a shoulder 103 which is arranged to engage with the engaging fingers 71 so as to resist removal of the component 100 from the fitting 1.

The internal surface of the retaining sleeve portion 93 is arranged to guide and support the male part 101, and in particular the shoulder 103 as the male part engages with the engaging fingers 71. The internal diameter of the retaining sleeve portion 93 is selected to match the external diameter of the shoulder 103.

The O-ring retaining portion 91 and hence O-ring 92 are disposed in the bore B so that they are further into the bore B, that is further away from the connector insertion end E, than are the engaging fingers 71 or more particularly than an engaging region where the fingers 71 engage with an inserted component 100.

Correspondingly the O-ring retaining portion 91 and hence O-ring 92 are disposed in the bore B so that they are further into the bore B, that is further away from the connector insertion end E, than is the shoulder 103 when the male part 101 is fully inserted and captured in the fitting 1.

This helps ensure the fitting O-ring is in a protected location - both from physical damage and from exposure to UV.

Also providing the O-ring 92 at this location helps ensure that an effective seal may be made with the male part 101. Whilst quick-connect male parts are generally interchangeably usable with at least most quick-connect fittings, the dimensioning of the parts across manufactures are not identical. Providing the fitting O-ring 92 inwards of the engaging region of the fingers 71/shoulder 103 has been found to help ensure a seal can be achieved.

In the present case the O-ring retaining portion 91 and hence O-ring 92 are disposed in the bore B so that they are less far into the bore B, that is closer to the connector insertion end E, than is the location at which the connector O-ring 102 is intended to seal on the side wall of the bore B.

Correspondingly the O-ring retaining portion 91 and hence O-ring 92 are disposed in the bore B so that they are less far into the bore B, that is closer to the connector insertion end E, than is the connector O-ring 102 when the male part 101 is fully inserted and captured in the fitting 1.

Having the O-ring retaining portion 91 and hence fitting O-ring 92 thus positioned effectively between the shoulder 103 and connector O-ring 102 when the male part 101 is fully inserted and captured in the fitting 1, has been found most effective for reliably forming a seal with the present male part 101 and with quick-connect male parts 101 of different origins.

In selecting this location, one further factor that needs to be taken into account is that when the present type of connector arrangements are in use and under water pressure, the connected component 100 and fitting 1 tend to be driven away from one another by the water pressure. The effect of this can be discerned by considering Figures 3 and 4. Figure 3 shows the arrangement when not pressurised and Figure 4 shows the arrangement when pressurised. As seen in Figure 4 the tap adaptor 100 has moved slightly away from the fitting 1, and this of course changes the position on the male end 101 where the fitting O-ring 92 contacts/seals. This realisation shows that, even though an initial thought might be to position the fitting O-ring 92 as far into the bore B as possible, arranging the sealing location to be beyond the location of the connector O-ring 102 is likely to be sub-optimal.

It will be noted that the fitting O-ring 92 has a main internal diameter which is larger than a main external diameter of the connector O-ring seal 102.

Further the fitting 1 and male connector portion 101 are arranged so that the connector O-ring 102 passes through the fitting O-ring 92 as the male connector portion 101 is inserted into the receiving bore B.

In this embodiment the diameter of the cross-section of the material of the fitting O-ring 92 is smaller than the diameter of the cross-section of the material of the connector portion O-ring 102.

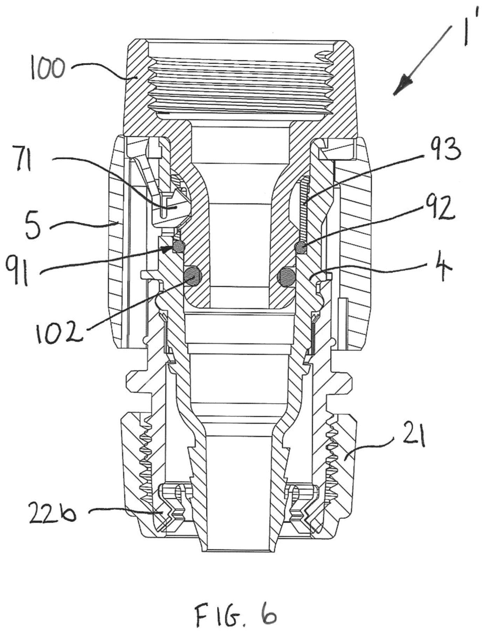

Figure 6 shows an alternative garden hose fitting 1' which differs from that of Figures 1 to 5B in that it does not include a locking ring 6 and has what might be termed forward facing or conventional hose retaining claws 22b rather than the reverse claws of the fitting of Figures 1 to 5B. Thus in those senses this hose fitting 1' is more conventional than that of Figures 1 to 5B. This hose fitting 1' does though comprise a fitting O-ring 92 disposed in the bore B of the fitting and a retaining sleeve 91 which together with the complimentary features of the body 4 are the same as in the hose fitting 1 of Figures 1 to 5B. This fitting 1' thus provides the same functionality and benefits that emanate from those features and so helps to minimise leakage that may occur if the connector O-ring 102 is damaged.

## Claims

1. A garden hose fitting comprising:
a hose connector portion for accepting the end of a garden hose and a connector receiving portion for accepting an O-ring carrying male connector portion of a component to be connected to the hose fitting,
the connector receiving portion defining a receiving bore for accepting the male connector portion and comprising a plurality of engaging fingers arranged to move resiliently between an extended position for capturing the male connector portion and a retracted position facilitating insertion and removal of the male connector portion in the receiving bore,
wherein an O-ring retaining portion is provided in the receiving bore for accepting an O-ring which is retained in the fitting and arranged for sealing against a male connector portion when inserted into the receiving bore and connected to the hose fitting.

2. A garden hose fitting according to claim 1 in which the O-ring retaining portion is provided as a recess in a sidewall of the receiving bore.

3. A garden hose fitting according to claim 1 or claim 2 in which the fitting has a connector portion insertion end via which a male connector portion is introducible into the receiving bore and an engaging region at which the engaging fingers protrude into the receiving bore, wherein the O-ring retaining portion is disposed further away from the connector portion insertion end of the fitting than is the engaging region.

4. A garden hose fitting according to any preceding claim in which the O-ring retaining portion is disposed closer to the connector portion insertion end of the fitting than is a region of the receiving bore which is arranged to seal against the connector O-ring of a male connector portion when received in the fitting.

5. A garden hose fitting according to any preceding clam in which the O-ring retaining portion is disposed in the bore so that when a male connector portion is received in the fitting, the male connector portion extends past the location of the O-ring retaining portion.

6. A garden hose fitting according to any preceding claim in which the O-ring retaining portion is at least partly defined by a retaining sleeve portion which is received in the receiving bore, optionally in which:
the connector receiving portion of the fitting comprises a body portion and the retaining sleeve portion is mounted on the body portion: and/or
the O-ring retaining portion comprises a groove defined by the body portion and the retaining sleeve portion.

7. A garden hose fitting according to claim 6 in which the retaining sleeve portion is arranged to clamp a received fitting O-ring into position in the receiving bore.

8. A garden hose fitting according to claim 6 or claim 7 in which the retaining sleeve portion is disposed in an engaging region at which the engaging fingers protrude into the receiving bore.

9. A garden hose fitting according to any one of claims 6 to 8 in which the retaining sleeve portion comprises at least one aperture through which a respective one of the plurality of engaging fingers extends when in the extended position.

10. A garden hose fitting according to any one of claims 6 to 9 in which the fitting comprises at least one projection in the receiving bore which is arranged to engage with a complimentary recess provided on an outer curved surface of the retaining sleeve portion for positioning the retaining sleeve portion in the fitting, wherein the interaction of the at least one projection and the complimentary recess, positions the retaining sleeve portion axially with respect to the body portion and/or angularly around the axis of the body portion.

11. A garden hose fitting according to any preceding claim in which the connector receiving portion of the hose fitting comprises a retractable sleeve and a body portion with the retractable sleeve mounted for axial movement on the body portion, and the release mechanism is arranged to be operated by an axial retraction of the retractable sleeve relative to the body portion away from the connector portion insertion end of the fitting, and
wherein the hose fitting comprises a blocking ring portion which is moveably mounted on the connector receiving portion and moveable between a non-blocking position which allows retraction of the retractable sleeve relative to the body portion so allowing operation of the release mechanism and a blocking position in which the blocking ring portion blocks retraction of the retractable sleeve relative to the body so obstructing operation of the release mechanism.

12. A garden hose fitting according to any preceding claim in which the hose fitting comprises at least one finger obstruction portion which is moveable between a first, non-operative, position which allows movement of the plurality of engaging fingers to the retracted position and a second, obstructing, position in which the at least one finger obstruction portion obstructs movement of at least one engaging finger of the plurality of engaging fingers to the retracted position, optionally in which:
a locking ring is provided on which the at least one finger obstruction portion is mounted, and which is usable by a user for moving the at least one finger obstruction portion between the first and second positions, the locking ring portion being rotatably mounted on the connector receiving portion and rotatable around an axis of the fitting to move the at least one finger obstruction portion between the first and second positions.

13. A garden hose fitting according to claim 11 in which the hose fitting comprises at least one finger obstruction portion which is moveable between a first, non-operative, position which allows movement of the plurality of engaging fingers to the retracted position and a second, obstructing, position in which the at least one finger obstruction portion obstructs movement of at least one engaging finger of the plurality of engaging fingers to the retracted position, and in which a locking ring is provided on which the at least one finger obstruction portion is mounted, and which is usable by a user for moving the at least one finger obstruction portion between the first and second positions, the locking ring portion being rotatably mounted on the connector receiving portion and rotatable around an axis of the fitting to move the at least one finger obstruction portion between the first and second positions, and the locking ring portion comprising the blocking ring, so that movement of the locking ring portion moves both the blocking ring and the at least one finger obstruction portions.

14. A garden hose fitting assembly comprising a garden hose fitting according to any preceding claim and an O-ring disposed in the O-ring retaining portion of the fitting.

15. A connector arrangement comprising a hose fitting assembly as claimed in claim 14 and a component connected to the hose fitting assembly, the component comprising a male connector portion accepted in the connector receiving portion of the hose fitting.

16. A connector arrangement according to claim 15 in which the male connector portion comprises a shoulder portion arranged to engage with the engaging fingers when the male connector portion is received in the receiving bore and the O-ring retaining portion in the fitting is arranged to be axially between the at least one connector O-ring seal of, and the shoulder portion of, the male connector portion when the male connector portion is received in and captured in the receiving bore.
